# FASCICULE DE BREVET EUROPEEN

(11) **EP 0 403 373 B1**
(45) Date de publication et mention de la délivrance du brevet: **13.10.1993**
(21) Numéro de dépôt: 90401630.0
(22) Date de dépôt: 13.06.1990
(51) Int. Cl.: B65B 47/04, B29C 51/30

(54) **Dispositif et installation pour le conditionnement de produits quelconques, par exemple de produits alimentaires, dans des barquettes fermées par un film soudé de fermeture**
Vorrichtung und Anlage zum Verpacken von Produkten, z.B. Nahrungsmittel, in mit einer geschweissten Verschliessfolie verschlossene Schalen
Device and plant for packaging products, e.g. food products, in trays closed by means of a sealed closing film

(30) Priorité: 16.06.1989 FR 8908005
(43) Date de publication de la demande: 19.12.1990
(73) Titulaire: MECAPLASTIC, F-93170 Bagnolet (FR)
(72) Inventeur: Robache, Patrick, F-75020 Paris (FR)
(74) Mandataire: Boutin, Antoine

(56) Documents cités:
- DE-A- 2 722 745
- GB-A- 2 210 579

## Description

La présente invention concerne les emballages utilisés pour le conditionnement de certains produits, notamment de produits alimentaires, et qui sont constitués par une barquette en matière thermo-plastique sur les bords de laquelle est rapporté un film de fermeture fixé de façon étanche par soudure.

Les emballages de ce genre ont l'avantage de permettre une excellente conservation des produits contenus dans ceux-ci. Par ailleurs, ces emballages sont faciles à utiliser puisqu'il suffit de retirer le film de fermeture pour pouvoir accéder à leur contenu.

Toutefois, ces emballages ont pour inconvénient d'être conçus pour être disposés à plat. Dans ces conditions, les mentions publicitaires apposées sur le film de fermeture ne sont pas visibles par les acheteurs éventuels lorsque de tels emballages sont disposés sur les étagères d'un rayonnage ou similaire.

Pour éliminer cet inconvénient, il a déjà été proposé de prévoir pour celles-ci une forme particulière permettant que ces barquettes puissent se maintenir de façon stable dans une position redressée. A cet effet, deux des parois opposées de ces barquettes sont inclinées par rapport à un plan perpendiculaire au plan de fermeture, au lieu d'être parallèles à un tel plan. Ces barquettes connues sont par exemple du type décrit dans le document GB-A-2 210 579, qui a pour objet une barquette de présentation apte à être placée verticalement en se supportant elle-même.

Ceci permet alors de disposer ces barquettes dans une position redressée dans laquelle elles peuvent prendre appui sur un support horizontal d'une part le long d'un côté de leur rebord d'entourage et d'autre part le long du côté inférieur de la paroi inclinée qui forme une saillie vers l'extérieur.

Cependant la fabrication de telles barquettes nécessite l'emploi de moules spéciaux relativement coûteux de façon à pouvoir dégager la partie mâle du moule utilisé.

Ces installations de fabrication connues sont par exemple du type décrit dans le document GB-A-2 210 579, qui a également pour objet un procédé de fabrication utilisant un moule de forme complexe.

De plus, la forme particulière de ces barquettes soulève également des difficultés dans les installations de conditionnement conçues pour réaliser à la fois la fabrication de telles barquettes et la soudure d'un film de fermeture sur celles-ci.

C'est pourquoi la présente invention a pour objet un dispositif de fabrication par moulage ou thermo-formage qui est spécialement destiné à la réalisation de barquettes à parois inclinées et qui est conçu pour éviter les inconvénients des dispositifs utilisés actuellement à cet effet.

Dans ce but, le dispositif selon l'invention est essentiellement caractérisé en ce que les deux pièces de moulage, ou de formage, prévues dans celui-ci sont portées par des supports mobiles aptes à assurer leur déplacement selon un axe parallèle aux parois inclinées de ces pièces qui correspondent aux parois inclinées de la barquette de conditionnement à réaliser, cet axe de déplacement étant donc incliné de la même façon par rapport à un plan perpendiculaire au plan de fermeture de ce moule. Un tel agencement a pour avantage qu'il est ainsi possible d'utiliser des pièces simples de moulage constituées par une pièce externe femelle et un poinçon interne.

Cependant la présente invention a également pour objet une installation spécialement conçue pour le conditionnement de produits quelconques, par exemple de produits alimentaires dans des barquettes à parois inclinées susceptibles d'être placées ultérieurement dans une position redressée. Cette installation est essentiellement caractérisée en ce que :
- pour la fabrication en continu de ces barquettes, cette installation comprend un dispositif de thermo-formage tel que défini ci-dessus,
- et à la suite de celui-ci, il est prévu un poste apte à assurer la soudure d'un film de fermeture sur le rebord de chacune de ces barquettes, le support creux prévu dans ce poste pour recevoir la barquette correspondante ayant des parois inclinées correspondant à celles de chaque barquette et étant monté mobile selon un axe présentant la même inclinaison.

Cependant d'autres particularités et avantages de l'objet de l'invention apparaitront au cours de la description suivante. Celle-ci est donnée en référence aux dessins annexés à simple titre indicatif, et sur lesquels :

La figure 1 est une vue schématique en coupe longitudinale d'une installation de conditionnement d'un produit quelconque dans des barquettes à parois inclinées.

La figure 2 est une vue en perspective d'un emballage réalisé au moyen de cette installation.

La figure 3 est une vue en élévation d'un tel emballage représenté en position redressée sur un support horizontal, par exemple l'étagère d'un rayonnage.

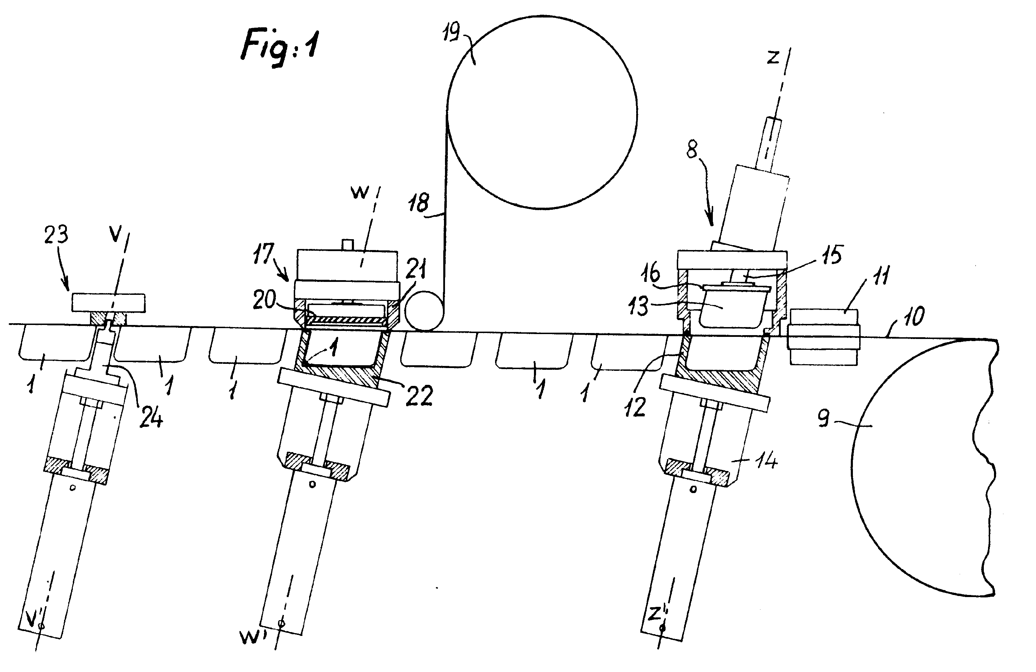

Comme déjà indiqué, l'installation représentée à la figure 1 est destinée à assurer le conditionnement de produits quelconques dans des barquettes 1 susceptibles d'être placées dans une position redressée sur un support horizontal, par exemple une étagère 2 d'un rayonnage. De même que les autres barquettes usuelles de conditionnement, ces barquettes comportent un rebord débordant 3 d'entourage qui matérialise en quelque sorte le plan de fermeture X-X' de celles-ci. Du reste, le film 4 de fermeture de ces barquettes est disposé dans ce plan et il est soudé sur le dessus du rebord 3 de celles-ci. Les deux parois d'extrémité 5 de ces barquettes ont une forme usuelle. Elles sont donc parallèles à un plan perpendiculaire au plan de fermeture X-X' ou bien inclinées l'une vers l'autre en direction du fond de la barquette correspondante.

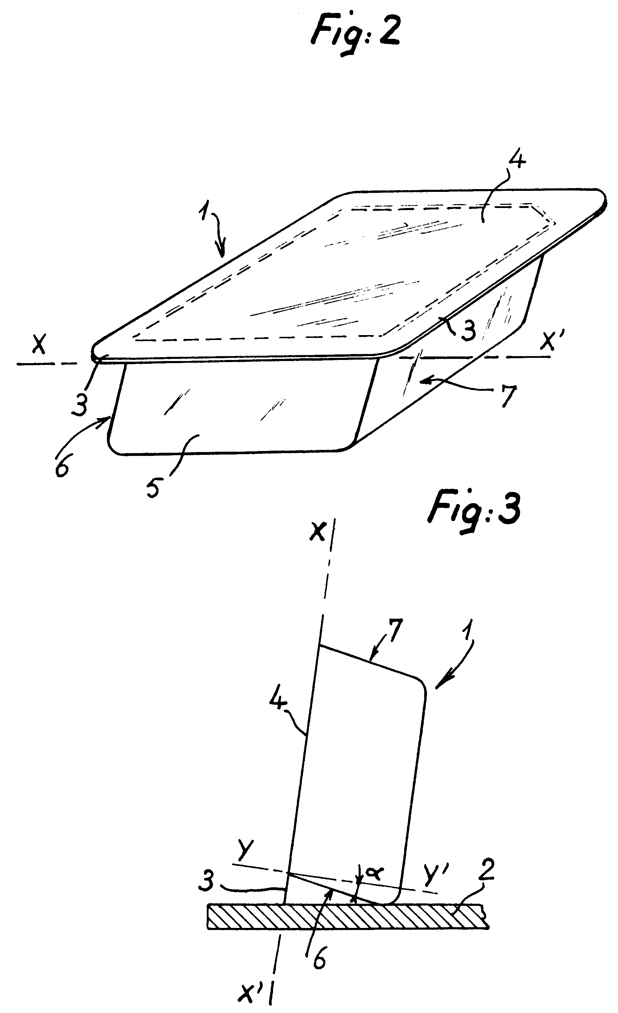

Par contre les deux longues parois latérales opposées 6 et 7 ont une forme particulière permettant de placer une barquette 1 dans la position redressée représentée à la figure 3. A cet effet, ces deux parois parallèles sont inclinées d'un angle α par rapport à un plan Y-Y' perpendiculaire au plan de fermeture X-X'. La valeur de cet angle α doit être déterminée pour qu'après remplissage l'emballage correspondant puisse se maintenir stable lorsqu'il se trouve dans la position redressée représentée à la figure 3. Pour déterminer cette valeur, il convient de tenir compte notamment de la largeur du débordement du rebord 3 ainsi que la profondeur de la barquette 1. A simple titre d'exemple, il peut être indiqué que l'angle α peut avoir une valeur comprise entre 5 et 30°.

L'installation représentée à la figure 1 comprend un poste 8 de thermo-formage qui constitue dans celle-ci le dispositif de fabrication des barquettes 1. Ce poste est alimenté à partir d'une bobine 9 portant le film 10 utilisé pour la fabrication des barquettes 1. Avant d'atteindre le poste de thermo-formage 8, ce film passe à travers un poste 11 de préchauffage.

Le poste de thermo-formage 8 comprend deux pièces de formage constituées respectivement par une pièce externe femelle 12 en forme de cuvette et une pièce mâle 13 en forme de poinçon. Ces deux pièces sont fixées sur des supports mobiles, respectivement 14 et 15. Or ceux-ci ont la particularité de se déplacer selon un axe 22 qui est incliné d'un angle α par rapport au plan de défilement du film 10, lequel correspond au plan de fermeture des barquettes à réaliser. Bien entendu les parois latérales des deux pièces de moulage 12 et 13 présentent la même inclinaison de façon à former entre elles les parois inclinées 6 et 7 des barquettes 1. Par contre, le rebord supérieur 16 de la pièce mâle 13 est parallèle au plan du film 10 de façon à former le rebord 3 d'entourage dans un tel plan.

Grâce au fait qu'elles se déplacent selon un axe incliné Z-Z', les deux pièces de moulage 12 et 13 peuvent être de conception très simple. En l'occurrence il s'agit de pièces d'un seul tenant et non pas de pièces à tiroirs comme cela devrait être le cas si l'axe de déplacement était perpendiculaire au plan du film 10. Il en résulte un accroissement des cadences de fabrication ainsi qu'une réduction du prix de l'installation.

Ce poste 8 de thermo-formage est suivi d'un poste 17 de soudure du film 18 de fermeture provenant d'une bobine d'alimentation 19. De la façon habituelle, ce poste comporte une électrode supérieure mobile 20 de soudure qui est disposée à l'intérieur d'une cloche 21 d'étanchéïté. Dans le bas, il comporte un support creux 22 en forme de cuvette destiné à soutenir une barquette 1 de conditionnement pendant l'opération de soudure.

Or ce support mobile a pour particularité de se déplacer selon un axe W-W' qui présente la même inclinaison que les parois latérales des barquettes 1. Là encore ceci permet d'utiliser une pièce de support de conception très simple.

Enfin, l'installation comporte un poste de découpe 23 destiné à assurer la séparation des emballages réalisés les uns à la suite des autres. Or l'outil 24 de découpe prévu dans ce poste est monté de façon à se déplacer selon un axe V-V' qui présente également la même inclinaison que les parois latérales des barquettes 1. Ceci permet donc que cet outil puisse s'engager sans difficulté entre deux barquettes successives comme représenté sur la figure 1.

Il convient de noter que le dispositif 8 de fabrication par thermo-formage pourrait être remplacé par un dispositif de fabrication par moulage qui serait adapté à réaliser les barquettes 1 séparément les unes à la suite des autres en matière plastique injectée. Dans un tel cas, ce dispositif de moulage comporterait la même caractéristique principale que le dispositif 8 de thermo-formage. En conséquence, les deux pièces de moulage seraient montées sur des supports mobiles aptes à se déplacer selon un axe ayant la même inclinaison que les parois latérales 6 et 7 des barquettes à réaliser.

Bien entendu, ce dispositif de moulage pourrait être intégré dans une installation de conditionnement complète susceptible d'assurer ensuite la soudure d'un film de fermeture 18. Dans un tel cas, le poste de soudure serait identique au poste 17 prévu dans l'exemple illustré à la figure 1. De même le poste final de découpe serait similaire au poste 23 également prévu dans cet exemple.

Ainsi qu'il a déjà été indiqué, les emballages ainsi réalisés ont pour avantage de pouvoir être disposés de façon stable dans la position redressée représentée à la figure 3. Dans ces conditions, les mentions publicitaires figurant sur le film de fermeture 4 de ces emballages sont parfaitement visibles pour les acheteurs éventuels lorsque ces emballages sont disposés sur les étagères d'un rayonnage utilisé dans un magasin de vente.

## Revendications

1. Dispositif pour le moulage ou le thermo-formage d'une barquette de conditionnement (1) dont deux parois parallèles (6,7) opposées sont inclinées par rapport à un plan (Y-Y') perpendiculaire au plan de fermeture (X-X') de celle-ci, caractérisé en ce que les deux pièces de moulage ou de formage (12, 13) sont portées par des supports mobiles (14, 15) aptes à assurer leur déplacement selon un axe (Z-Z') parallèle aux parois inclinées de ces pièces qui correspondent aux parois inclinées (6, 7) de la barquette de conditionnement (1) à réaliser, cet axe de déplacement étant donc incliné de la même façon par rapport à un plan perpendiculaire au plan de fermeture de ce moule, ce qui permet d'utiliser des pièces simples de moulage constituées par une pièce externe femelle (12) et un poinçon interne (13).

2. Installation pour le conditionnement de produits quelconques par exemple de produits alimentaires, dans des barquettes dont deux parois parallèles (6, 7) opposées sont inclinées par rapport à un plan (Y, Y') perpendiculaire au plan de fermeture (X-X') de chacune de celles-ci, caractérisée en ce que :
- pour la fabrication en continu de ces barquettes, cette installation comprend un dispositif (8) de thermo-formage selon la revendication 1,
- et à la suite de celui-ci il est prévu un poste (17) apte à assurer la soudure d'un film de fermeture (18) sur le rebord (3) de chacune de ces barquettes, le support creux (22), prévu dans ce poste pour recevoir la barquette correspondante (1), ayant des parois inclinées correspondant à celles de chaque barquette et étant monté mobile selon un axe (W-W') présentant la même inclinaison.

3. Installation selon la revendication 2, caractérisée en ce qu'à la suite du poste (17) de soudure du film de fermeture (18), il est prévu un poste (23) de découpe destiné à assurer la séparation des emballages réalisés, l'outil de découpe (24) étant mobile selon un axe (V-V') parallèle au parois inclinées (6, 7) des barquettes de conditionnement.

## Patentansprüche

1. Vorrichtung zum Gießen oder Warmformen einer Verpackungsschale (1) mit zwei einander entgegengesetzten parallelen Wänden (6, 7), die relativ zu einer zur Verschlußebene (X-X') senkrechten Ebene (Y-Y') geneigt sind, **dadurch gekennzeichnet**, daß die beiden Guß- oder Formwerkzeugteile (12, 13) von beweglichen Haltern (14, 15) getragen sind, mittels derer sie längs einer Achse (Z-Z') verschiebbar sind, die parallel zu den geneigten Wandungen dieser Werkzeugteile verläuft, die den geneigten Wänden (6, 7) der herzustellenden Verpackungsschale entsprechen, derart daß die Verschiebungsachse also relativ zu einer zur Verschlußebene der Form senkrechten Ebene in der gleichen Weise geneigt ist, so daß die Verwendung einfacher Formwerkzeugfeile möglich ist, die aus einem äußeren Matrizenteil (12) und einem inneren Formstempel (13) bestehen.

2. Anlage zum Verpacken beliebiger Produkte, z.B. von Lebensmitteln, in Schalen, von denen zwei einander entgegengesetzte parallele Wände (6, 7) relativ zu einer zur Verschlußebene der einzelnen Schalen (X-X') senkrechten Ebene (Y-Y') geneigt sind,
**dadurch gekennzeichnet**,
daß die Anlage eine Vorrichtung nach Anspruch 1 für die kontinuierliche Fabrikation der Schalen aufweist,
und daß im Anschluß an diese Vorrichtung eine Station (17) vorgesehen ist, die das Aufschweißen eines Verschlußfilms (18) auf die Randleiste (3) jeder der Schalen ermöglicht, wobei der in dieser Station vorgesehene hohle Halter (22) zur Aufnahme der entsprechenden Schale (1), der geneigte Wandungen besitzt, die denjenigen der einzelnen Schalen entsprechen, so montiert ist, daß er längs einer Achse (W-W') bewegbar ist, die die gleiche Neigung hat.

3. Anlage nach Anspruch 2, dadurch gekennzeichnet, daß im Anschluß an die Station (17) zum Aufschweißen des Verschlußfilms (18) eine Schneidstation (23) vorgesehen ist, die das Trennen der hergestellten Verpackungen ermöglicht, wobei das Schneidwerkzeug (24) längs einer zu den geneigten Wänden (6, 7) der Verpackungsschalen parallelen Achse (V-V') bewegbar ist.

## Claims

1. A device for moulding or thermo-forming a packaging tray (1) having two opposite parallel walls (6, 7) which are inclined relative to a plane (Y-Y') perpendicular to the closing plane (X-X') of said tray (1),
**characterized** in that the two moulding or thermo-forming parts (12, 13), are carried by movable supporting members (14, 15) adapted for moving said parts along an axis (Z-Z') parallel to the slanted walls (6, 7) of the packaging tray (1) to be produced, said axis of displacement being therefore slanted in the same manner relative to a plane perpendicular to the closing plane of said mould, thus making it possible to use simple moulding parts constituted by an external female part (12) and an internal punch (13).

2. A plant for packaging products, e.g. food products, in trays having two opposite parallel walls (6, 7) which are slanted relative to a plane (Y-Y') perpendicular to the closing plane (X-X') of each tray, **characterized** in that :
- this plant comprises, for the continuous manufacturing of said trays, a thermo-forming device (8) according to Claim 1;
- and there is provided, downstream of said device (8) a welding station (17) adapted for welding a closing film (18) onto the rim (3) of each tray, the hollow support (22) provided in said welding station for receiving the respective tray (1) having slanted walls corresponding to the walls of each tray and being movably mounted along an axis (W-W') presenting the same slant.

3. A plant according to Claim 2, characterized in that there is provided, downstream of the welding station (17) for welding the closing film (18), a cutting station (23) adapted for severing the packagings having been made, the cutting tool (24) being movable along an axis (V-V') being parallel to the slanted walls (6, 7) of the packaging trays.
